# EUROPEAN PATENT APPLICATION

(11) **EP 4 750 105 A1**
(43) Date of publication of application: **27.05.2026**
(21) Application number: 24853495.0
(22) Date of filing: 19.07.2024
(51) Int. Cl.: H04W 8/22, H04W 72/0453, H04W 72/23, H04W 72/51

(54) **COMMUNICATION METHOD AND COMMUNICATION APPARATUS**

(30) Priority: 11.08.2023 CN 202311021314
(71) Applicant: HUAWEI TECHNOLOGIES CO., LTD., Shenzhen 518129 (CN)
(72) Inventor: LI, Jiaojiao, Shenzhen, Guangdong 518129 (CN); XIE, Xi, Shenzhen, Guangdong 518129 (CN); SHI, Yulong, Shenzhen, Guangdong 518129 (CN); CHANG, Junren, Shenzhen, Guangdong 518129 (CN); LIU, Nannan, Shenzhen, Guangdong 518129 (CN)
(74) Representative: Goddar, Heinz J.
(86) International application number: PCT/CN2024/106386
(87) International publication number: WO 2025/036083

(57) **Abstract**

This application provides a communication method and a communication apparatus. The method includes: receiving first information, where the first information includes first configuration information and second configuration information, or the first information includes the first configuration information but does not include the second configuration information, where the first configuration information indicates a frequency band to which a first cell belongs, and the second configuration information indicates that the first cell supports a first communication mode; and determining, based on a first condition, that the first cell is barred or not barred, where when the first condition is not met, the first cell is barred, and the first condition includes: when the first information does not include the second configuration information, a terminal device supports a second communication mode on a first frequency band; or the first information includes the second configuration information, where the frequency band to which the first cell belongs includes the first frequency band, and the first communication mode is different from the second communication mode. This can avoid a problem that a communication mode supported by the first cell does not match a communication mode supported by the terminal device, and improve operating reliability of the terminal device.

## Description

This application claims priority to Chinese Patent Application No. 202311021314.5, filed with the China National Intellectual Property Administration on August 11, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

To reduce costs of terminal devices, a terminal device with reduced capabilities, for example, a reduced capability terminal device (reduced capability UE, RedCap UE), is currently introduced. The reduced capability terminal device may support a half-duplex frequency division duplex (half-duplex frequency division duplex, HD-FDD) mode. In other words, the terminal device does not support simultaneous receiving and sending on different frequencies. This reduces implementation complexity of the terminal device, and reduces costs in comparison with a full-duplex frequency division duplex (full-duplex frequency division duplex, FD-FDD) mode.

The terminal device may have different capabilities of supporting communication modes on different frequencies. For example, the terminal device supports only HD-FDD on some frequencies, and supports not only HD-FDD on some frequencies. However, currently, this case is not considered when the terminal device selects a cell. As a result, a capability of the cell does not match a capability of the terminal device, and the terminal device cannot operate.

### SUMMARY

This application provides a communication method and a communication apparatus, to improve operating reliability of a terminal device.

According to a first aspect, a communication method is provided. The method may be performed by a terminal device or a chip in the terminal device. The method includes: receiving first information, where the first information includes first configuration information and second configuration information, or the first information includes the first configuration information but does not include the second configuration information, where the first configuration information indicates a frequency band to which a first cell belongs, and the second configuration information indicates that the first cell supports a first communication mode; and determining, based on a first condition, that the first cell is barred or not barred, where when the first condition is not met, the first cell is barred, and the first condition includes: when the first information does not include the second configuration information, the terminal device supports a second communication mode on a first frequency band; or the first information includes the second configuration information, where the frequency band to which the first cell belongs includes the first frequency band, and the first communication mode is different from the second communication mode.

According to this technical solution, in the condition for determining whether the first cell is barred, the terminal device considers a capability of the terminal device to support a communication mode on a frequency band, to avoid a problem that a communication mode supported by the first cell on the first frequency band does not match a communication mode supported by the terminal device on the first frequency band, and avoid a problem that communication cannot be performed due to mismatch between a capability of the terminal device and a capability of the cell, thereby improving operating reliability of the terminal device.

According to a second aspect, a communication method is provided. The method may be performed by a network device or a chip in the network device. The method includes: sending first information, where the first information includes first configuration information and second configuration information, or the first information includes the first configuration information but does not include the second configuration information, where the first configuration information indicates a frequency band to which a first cell belongs, and the second configuration information indicates that the first cell supports a first communication mode, where when a first condition is not met, the first cell is barred, and the first condition includes: when the first information does not include the second configuration information, a terminal device supports a second communication mode on a first frequency band; or the first information includes the second configuration information, where the frequency band to which the first cell belongs includes the first frequency band, and the first communication mode is different from the second communication mode.

For beneficial technical effects of the implementations of the second aspect, refer to descriptions of related implementations of the first aspect. Details are not described again.

With reference to the first aspect or the second aspect, in some implementations, the first communication mode is half-duplex frequency division duplex HD-FDD.

With reference to the first aspect or the second aspect, in some implementations, the first condition further includes one or more of the following: the first frequency band is a frequency division duplex FDD frequency band; the terminal device supports an emission requirement of the first frequency band; the terminal device supports a first uplink channel bandwidth, and a maximum transmission bandwidth of the first uplink channel bandwidth is smaller than or equal to a carrier bandwidth and is larger than or equal to a bandwidth of an initial uplink bandwidth part BWP; the terminal device supports a first downlink channel bandwidth, and a maximum transmission bandwidth of the first downlink channel bandwidth is smaller than or equal to a carrier bandwidth and is larger than or equal to a bandwidth of an initial downlink BWP; and uplink transmission with a frequency shift is enabled for the terminal device, and the terminal device supports the frequency shift on the first frequency band; or uplink transmission with a frequency shift is disabled for the terminal device.

According to this technical solution, the terminal device may determine a plurality of conditions to determine whether the first cell is barred, thereby further improving the operating reliability of the terminal device.

With reference to the first aspect or the second aspect, in some implementations, when the first condition is met, a 1^{st} frequency band that meets a second condition is selected from the frequency band to which the first cell belongs, and the second condition includes at least one of the following: when the first information does not include the second configuration information, the second communication mode is supported.

According to this technical solution, the terminal device selects a bandwidth that meets the second condition, to avoid selecting a bandwidth on which a capability of the terminal device does not match a capability of the first cell, thereby improving the operating reliability of the terminal device.

With reference to the first aspect or the second aspect, in some implementations, the second condition further includes one or more of the following: an emission requirement is supported; and a frequency shift is supported when uplink transmission with the frequency shift is enabled.

With reference to the first aspect or the second aspect, in some implementations, the method further includes: when a third condition is met, determining that the first cell is configured with a supplementary uplink carrier SUL, where the third condition includes: when the first information does not include the second configuration information, the terminal device supports a third communication mode on a second frequency band; or the first information includes the second configuration information, where a frequency band that is for the SUL and to which the first cell belongs includes the second frequency band, and the first communication mode is different from the third communication mode.

Based on this embodiment of this application, when determining whether SUL is configured for the first cell, the terminal device may also consider a capability of supporting a communication mode on the frequency band that is for the SUL and to which the first cell belongs, to avoid a problem that a capability of the terminal device does not match a capability of the first cell on the frequency band that is for the SUL and to which the first cell belongs, and further improve the operating reliability of the terminal device.

With reference to the first aspect or the second aspect, in some implementations, the third condition further includes one or more of the following: a frequency band list that is of the SUL and that is supported by the terminal device includes the second frequency band; the terminal device supports an emission requirement of the second frequency band; the terminal device supports a second uplink channel bandwidth, and a maximum transmission bandwidth of the second uplink channel bandwidth is smaller than or equal to an SUL carrier bandwidth and is larger than or equal to a bandwidth of an initial uplink BWP of the SUL; and uplink transmission with a frequency shift is enabled for the terminal device, and the terminal device supports the frequency shift on the second frequency band; or uplink transmission with a frequency shift is disabled for the terminal device.

With reference to the first aspect or the second aspect, in some implementations, when the third condition is met, a 1^{st} frequency band that meets a fourth condition is selected from the frequency band that is for the SUL and to which the first cell belongs, and the fourth condition includes: when the first information does not include the second configuration information, the second communication mode is supported.

With reference to the first aspect or the second aspect, in some implementations, the fourth condition further includes one or more of the following: an emission requirement is supported; and a frequency shift is supported when uplink transmission with the SUL frequency shift is enabled.

According to a third aspect, a communication method is provided. The method may be performed by a terminal device or a chip in the terminal device. The method includes: receiving first information, where the first information includes first configuration information and second configuration information, or the first information includes the first configuration information but does not include the second configuration information, where the first configuration information indicates N frequency bands to which a first cell belongs, the second configuration information indicates that the first cell supports a first communication mode, and N is a positive integer; and determining, based on a fifth condition, that the first cell is barred, where when the fifth condition is met, the first cell is barred, and the fifth condition includes: when the first information does not include the second configuration information, the terminal device supports the first communication mode but does not support a second communication mode on the N frequency bands, where the first communication mode is different from the second communication mode.

According to this technical solution, in the condition for determining whether the first cell is barred, the terminal device considers a capability of the terminal device to support a communication mode on the N frequency bands, to avoid a problem that a communication mode supported by the first cell does not match a communication mode supported by the terminal device on a selected frequency band, and improve operating reliability of the terminal device.

According to a fourth aspect, a communication method is provided. The method may be performed by a network device or a chip in the network device. The method includes: sending first information, where the first information includes first configuration information and second configuration information, or the first information includes the first configuration information but does not include the second configuration information, where the first configuration information indicates N frequency bands to which a first cell belongs, the second configuration information indicates that the first cell supports a first communication mode, and N is a positive integer; and when a fifth condition is met, the first cell is barred, where the fifth condition includes: when the first information does not include the second configuration information, a terminal device supports the first communication mode but does not support a second communication mode on the N frequency bands, where the first communication mode is different from the second communication mode.

For beneficial technical effects of the implementations of the fourth aspect, refer to descriptions of related implementations of the first aspect. Details are not described again.

With reference to the third aspect or the fourth aspect, in some implementations, the N frequency bands include a frequency band for a normal uplink carrier NUL and a frequency band for a supplementary uplink carrier SUL.

According to a fifth aspect, a communication method is provided. The method may be performed by a terminal device or a chip in the terminal device. The method includes: sending capability information, where the capability information indicates that the terminal device supports or does not support half-duplex frequency division duplex HD-FDD on a first frequency band pair, and the first frequency band pair includes a frequency band for a supplementary uplink carrier and a frequency band for a downlink carrier.

According to this technical solution, it is specified that the terminal device reports, for a downlink frequency band, whether the SUL supports HD-FDD, so that whether the SUL supports HD-FDD can be indicated more flexibly and at a finer granularity.

According to a sixth aspect, a communication method is provided. The method may be performed by a network device or a chip in the network device. The method includes: receiving capability information, where the capability information indicates that a terminal device supports or does not support half-duplex frequency division duplex HD-FDD on a first frequency band pair, and the first frequency band pair includes a frequency band for a supplementary uplink carrier and a frequency band for a downlink carrier.

For beneficial technical effects of the implementations of the sixth aspect, refer to descriptions of related implementations of the first aspect. Details are not described again.

With reference to the fifth aspect or the sixth aspect, in some implementations, the frequency band for the supplementary uplink is a frequency band that is for the supplementary uplink and that is supported by the terminal device, and the downlink carrier frequency band is a frequency band that is for the downlink carrier and that is supported by the terminal device.

According to a seventh aspect, a communication apparatus is provided. The apparatus includes a transceiver unit and a processing unit. The transceiver unit is configured to receive first information, where the first information includes first configuration information and second configuration information, or the first information includes the first configuration information but does not include the second configuration information, where the first configuration information indicates a frequency band to which a first cell belongs, and the second configuration information indicates that the first cell supports a first communication mode. The processing unit is configured to determine, based on a first condition, that the first cell is barred or not barred, where when the first condition is not met, the first cell is barred, and the first condition includes: when the first information does not include the second configuration information, a terminal device supports a second communication mode on a first frequency band; or the first information includes the second configuration information, where the frequency band to which the first cell belongs includes the first frequency band, and the first communication mode is different from the second communication mode.

For implementations of the seventh aspect and beneficial technical effects of the implementations, refer to descriptions of related implementations of the first aspect. Details are not described again.

According to an eighth aspect, a communication apparatus is provided. The apparatus includes a transceiver unit and a processing unit. The processing unit is configured to generate first information. The transceiver unit is configured to send the first information, where the first information includes first configuration information and second configuration information, or the first information includes the first configuration information but does not include the second configuration information, where the first configuration information indicates a frequency band to which a first cell belongs, and the second configuration information indicates that the first cell supports a first communication mode, where when the first condition is not met, the first cell is barred, and the first condition includes: when the first information does not include the second configuration information, a terminal device supports a second communication mode on a first frequency band; or the first information includes the second configuration information, where the frequency band to which the first cell belongs includes the first frequency band, and the first communication mode is different from the second communication mode.

For implementations of the eighth aspect and beneficial technical effects of the implementations, refer to descriptions of related implementations of the first aspect. Details are not described again.

According to a ninth aspect, a communication apparatus is provided. The apparatus includes a transceiver unit and a processing unit. The transceiver unit is configured to receive first information, where the first information includes first configuration information and second configuration information, or the first information includes the first configuration information but does not include the second configuration information, where the first configuration information indicates N frequency bands to which a first cell belongs, the second configuration information indicates that the first cell supports a first communication mode, and N is a positive integer. The processing unit is configured to determine, based on a fifth condition, that the first cell is barred, where when the fifth condition is met, the first cell is barred, and the fifth condition includes: when the first information does not include the second configuration information, a terminal device supports the first communication mode but does not support a second communication mode on the N frequency bands, where the first communication mode is different from the second communication mode.

For implementations of the ninth aspect and beneficial technical effects of the implementations, refer to descriptions of related implementations of the third aspect. Details are not described again.

According to a tenth aspect, a communication apparatus is provided. The apparatus includes a transceiver unit and a processing unit. The processing unit is configured to generate first information. The transceiver unit is configured to send the first information, where the first information includes first configuration information and second configuration information, or the first information includes the first configuration information but does not include the second configuration information, where the first configuration information indicates N frequency bands to which a first cell belongs, the second configuration information indicates that the first cell supports a first communication mode, and N is a positive integer, where when a fifth condition is met, the first cell is barred, and the fifth condition includes: when the first information does not include the second configuration information, a terminal device supports the first communication mode but does not support a second communication mode on the N frequency bands, where the first communication mode is different from the second communication mode.

For implementations of the tenth aspect and beneficial technical effects of the implementations, refer to descriptions of related implementations of the third aspect. Details are not described again.

According to an eleventh aspect, a communication apparatus is provided. The apparatus includes a transceiver unit and a processing unit. The processing unit is configured to generate capability information. The transceiver unit is configured to send the capability information, where the capability information indicates that a terminal device supports or does not support half-duplex frequency division duplex HD-FDD on a first frequency band pair, and the first frequency band pair includes a frequency band for a supplementary uplink carrier and a frequency band for a downlink carrier.

For implementations of the eleventh aspect and beneficial technical effects of the implementations, refer to descriptions of related implementations of the fifth aspect. Details are not described again.

According to a twelfth aspect, a communication apparatus is provided. The apparatus includes a transceiver unit and a processing unit. The transceiver unit is configured to receive capability information, where the capability information indicates that a terminal device supports or does not support half-duplex frequency division duplex HD-FDD on a first frequency band pair, and the first frequency band pair includes a frequency band for a supplementary uplink carrier and a frequency band for a downlink carrier.

For implementations of the twelfth aspect and beneficial technical effects of the implementations, refer to descriptions of related implementations of the fifth aspect. Details are not described again.

According to a thirteenth aspect, a communication apparatus is provided. The communication apparatus has a function of implementing the method according to any one of the first aspect, the third aspect, the fifth aspect, or the possible implementations of the first aspect, the third aspect, or the fifth aspect. The function may be implemented by hardware, or may be implemented by hardware executing corresponding software. The hardware or the software includes one or more units or modules corresponding to the function.

According to a fourteenth aspect, a communication apparatus is provided. The communication apparatus has a function of implementing the method according to any one of the second aspect, the fourth aspect, the sixth aspect, or the possible implementations of the second aspect, the fourth aspect, or the sixth aspect. The function may be implemented by hardware, or may be implemented by hardware executing corresponding software. The hardware or the software includes one or more units or modules corresponding to the function.

According to a fifteenth aspect, a communication apparatus is provided, and includes a processor and a memory. Optionally, the communication apparatus may further include a transceiver. The memory is configured to store a computer program, and the processor is configured to invoke and run the computer program stored in the memory, and control the transceiver to receive and send a signal, to cause the communication apparatus to perform the method according to any one of the first aspect, the third aspect, the fifth aspect, or the possible implementations of the first aspect, the third aspect, or the fifth aspect.

For example, the communication apparatus is a terminal device or a chip used in the terminal device.

According to a sixteenth aspect, a communication apparatus is provided, and includes a processor and a memory. Optionally, the communication apparatus may further include a transceiver. The memory is configured to store a computer program, and the processor is configured to invoke and run the computer program stored in the memory, and control the transceiver to receive and send a signal, to cause the communication apparatus to perform the method according to any one of the second aspect, the fourth aspect, the sixth aspect, or the possible implementations of the second aspect, the fourth aspect, or the sixth aspect.

For example, the communication apparatus is a network device or a chip used in the network device.

According to a seventeenth aspect, a communication apparatus is provided, and includes a processor and a communication interface. The communication interface is configured to receive data and/or information, and transmit the received data and/or information to the processor. The processor processes the data and/or the information. In addition, the communication interface is further configured to output data and/or information that are/is obtained through processing by the processor, to cause the method according to any one of the first aspect, the third aspect, the fifth aspect, or the possible implementations of the first aspect, the third aspect, or the fifth aspect to be performed.

For example, the communication apparatus is a terminal device or a chip used in the terminal device.

According to an eighteenth aspect, a communication apparatus is provided, and includes a processor and a communication interface. The communication interface is configured to receive data and/or information, and transmit the received data and/or information to the processor. The processor processes the data and/or the information. In addition, the communication interface is further configured to output data and/or information that are/is obtained through processing by the processor, to cause the method according to any one of the second aspect, the fourth aspect, the sixth aspect, or the possible implementations of the second aspect, the fourth aspect, or the sixth aspect to be performed.

For example, the communication apparatus is a network device or a chip used in the network device.

According to a nineteenth aspect, a computer-readable storage medium is provided. The computer-readable storage medium stores computer instructions, and when the computer instructions are run on a computer, the method according to any one of the first aspect and the second aspect or the possible implementations of the first aspect and the second aspect is performed.

According to a twentieth aspect, a computer program product is provided. The computer program product includes computer program code, and when the computer program code is run on a computer, the method according to any one of the first aspect to the sixth aspect or the possible implementations of the first aspect to the sixth aspect is performed.

According to a twenty-first aspect, a communication system is provided, and includes the communication apparatus according to the thirteenth aspect and the communication apparatus according to the fourteenth aspect.

According to a twenty-second aspect, a communication system is provided, and includes the communication apparatus according to any one or more of the thirteenth aspect to the twentieth aspect, or the communication apparatus according to any one of the possible implementations of any one of the thirteenth aspect to the twentieth aspect.

### BRIEF DESCRIPTION OF DRAWINGS

FIG. 1 is a diagram of an architecture of a communication system according to an embodiment of this application;
FIG. 2 is a diagram of an HD-FDD operating mode;
FIG. 3 is a schematic flowchart of a communication method according to an embodiment of this application;
FIG. 4 is a schematic flowchart of another communication method according to an embodiment of this application; and
FIG. 5 to FIG. 7 are diagrams of possible communication apparatuses according to embodiments of this application.

### DESCRIPTION OF EMBODIMENTS

The following describes technical solutions of this application with reference to accompanying drawings.

The technical solutions in embodiments of this application may be applied to various communication systems, for example, 5th generation (5th generation, 5G), new radio (new radio, NR), long term evolution (long term evolution, LTE), internet of things (internet of things, IoT), wireless fidelity (wireless fidelity, Wi-Fi), 3rd generation partnership project (3rd generation partnership project, 3GPP)-related wireless communication, or other wireless communication that may occur in the future.

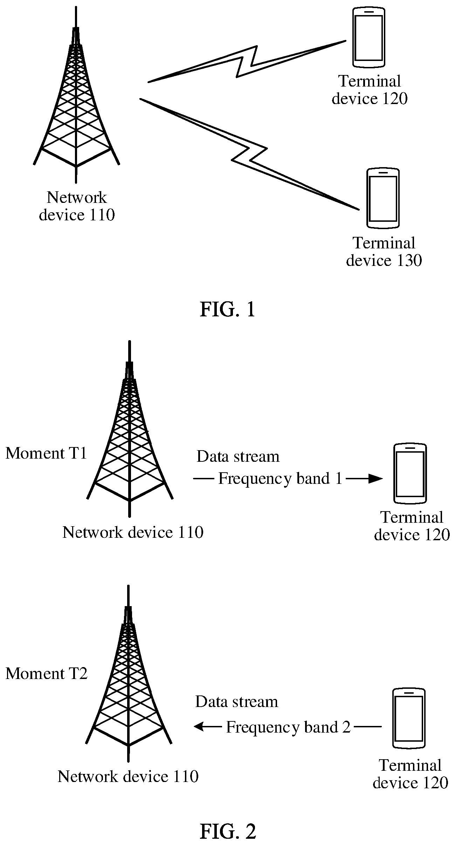

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 through a radio link to exchange information. It may be understood that, the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a road side unit (road side unit, RSU). A plurality of access network devices in a communication system may be base stations of a same type, or may be base stations of different types. The base station may communicate with the terminal device, or may communicate with the terminal device via a relay station. In this embodiment of this application, an apparatus configured to implement a function of the network device may be the network device, or may be an apparatus that can support the network device in implementing the function, for example, a chip system or a combined component or part that can implement a function of the access network device. The apparatus may be installed in the network device. In this embodiment of this application, the chip system may include a chip, or may include a chip and another discrete component.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC), internet of things, virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, and a robot. For example, the terminal device may be a handheld terminal in the cellular communication, a communication device in the D2D, an internet of things device in the MTC, a surveillance camera in the smart transportation and the smart city, or a communication device in the uncrewed aerial vehicle. The terminal device may be sometimes referred to as a user equipment (user equipment, UE), a user terminal, a user apparatus, a subscriber unit, a subscriber station, a terminal, an access terminal, an access station, a UE station, a remote station, a mobile device, a wireless communication device, or the like. In this embodiment of this application, an apparatus configured to implement a function of the terminal device may be the terminal device, or may be an apparatus that can support the terminal device in implementing the function, for example, a chip system or a combined component or part that can implement a function of the terminal device. The apparatus may be installed in the terminal device.

To facilitate understanding of embodiments of this application, concepts and related procedures in this application are described first.

### 1. Reduced capability terminal (reduced capability UE, RedCap UE)

The RedCap UE is a terminal with reduced capabilities, and the capabilities of the terminal device are lower than those in enhanced mobile broadband (enhanced mobile broadband, eMBB) and ultra-reliable and low-latency communication (ultra-reliable and low-latency communication, URLLC). For example, the RedCap UE may have the following reduced feature complexity: a reduced maximum bandwidth capability, a reduced transmit/receive antenna quantity/antenna branch (branch) quantity, a reduced maximum multiple-input multiple-output (multiple-input multiple-output, MIMO) layer quantity capability, a reduced maximum modulation order (modulation order) capability, supporting half-duplex frequency division duplex (frequency division duplex, FDD), and the like.

### 2. System information (system information, SI)

The system information is a message sent by a base station, and includes information required for UE initialization and information related to some other functions/features. The system information is classified into minimum system information (Minimum SI) and other system information (Other SI).

The minimum system information includes a master information block (master information block, MIB) and a system information block 1 (system information block 1, SIB1). The SIB1 is also referred to as remaining minimum system information (remaining minimum SI, RMSI). The MIB is periodically broadcast on a broadcast channel (broadcast channel, BCH). The SIB1 is periodically broadcast on a downlink shared channel (downlink shared channel, DL-SCH) or sent to a UE in an RRC connected (RRC_CONNECTED) mode by using dedicated signaling.

The other system information includes other SIBs such as a SIB2 to a SIB9. The other SIBs are periodically broadcast on the DL-SCH, or are broadcast on the DL-SCH on demand (on demand) (that is, a network broadcasts a SIB only when a UE in an RRC idle (RRC_IDLE) mode or a UE in an RRC inactive (RRC_INACTIVE) mode requests the SIB, or otherwise, the network does not send the SIB), or are sent to the UE in the RRC connected mode by using dedicated signaling.

### 3. Cell bar (cell bar) mechanism

It is an access control mechanism. In NR, a network sends a cell barred indication field (cellBarred) in a master information block MIB. The field indicates whether a current cell is barred (barred) or not barred (not barred). If a cell is barred, a UE in an RRC idle mode, a UE in an RRC inactive mode, and a UE performing RRC reestablishment cannot camp (camp) on the cell, and the cell is not used, within a period of time, as a candidate cell for cell reselection (cell reselection). In addition to the cell barred indication field in the MIB, the terminal device may further determine, based on another condition, whether the cell is barred or not barred. For example, a RedCap UE may further determine a cell barred status based on a cell barred indication field that is for the RedCap UE and that is in a SIB1.

### 4. Frequency division duplex FDD

Uplink data transmission and downlink data transmission are distinguished by using different frequencies. Uplink data and downlink data may be transmitted on two different frequency bands (bands) respectively. For a transmitting party, data receiving and data sending are performed at different frequencies.

### 5. Time division duplex

Uplink transmission and downlink transmission are distinguished by using time (for example, different slots). Uplink data and downlink data may be transmitted at different time. For a transmitting party, data receiving and data sending are performed at different time.

### 6. Communication mode: simplex, half-duplex (half-duplex), and full-duplex (full-duplex)

Simplex: refers to an operating mode in which data can be transmitted only in one direction, and data streams can be transmitted only from one party to the other party.

Half-duplex: refers to a transmission mode in which data can be transmitted in both directions but one party cannot receive and send data simultaneously. Half-duplex transmission can be further classified into half-duplex TDD and half-duplex FDD.

Half-duplex TDD: Only one of an uplink data stream and a downlink data stream can be transmitted at a given moment. In other words, a communication party sends data and receives data at the same frequency and at different time.

Half-duplex FDD (HD-FDD): Uplink data streams and downlink data streams are transmitted at different frequencies and at different time. In other words, a communication party sends data and receives data at different frequencies and at different time.

For example, FIG. 2 is a diagram of an HD-FDD operating mode. At a moment T1, a network device sends a data stream to a terminal device on a frequency band 1, and at a moment T2, the terminal device sends a data stream to the network device on a frequency band 2. The moment T1 and the moment T2 are different moments, and the frequency band 1 and the frequency band 2 are different frequency bands.

Full-duplex: refers to a transmission mode in which data can be transmitted in both directions and one party can receive and send data simultaneously. The full-duplex mode includes a half-duplex frequency division duplex mode.

Full-duplex FDD (FD-FDD): Uplink data and downlink data are simultaneously transmitted on different frequencies, in other words, a communication party simultaneously sends data and performs data transmission on different frequencies.

For ease of understanding of embodiments of this application, the following first briefly describes an existing procedure and manner in which a terminal device determines a barred status of a cell and selects a frequency band. Currently, a cell broadcasts a SIB1, and after receiving the SIB1, a UE determines, based on a half-duplex support field (halfDuplexRedCap-Allowed) and a UE capability, whether the cell is barred. If the SIB1 includes the half-duplex support field, the terminal device may determine that the cell supports HD-FDD. Otherwise, if the SIB1 does not include the half-duplex support field, the terminal device may determine that the cell does not support HD-FDD. If the terminal device determines that (1) the half-duplex support field is not present, and (2) the UE supports only an HD-FDD communication mode, the terminal device determines that the cell is barred (barred), and determines, based on an intra-frequency reselection field (intraFreqReselectionRedCap), whether an intra-frequency cell is barred.

It can be learned that, if the foregoing (1) and (2) are not met, the terminal device may perform a subsequent frequency band selection procedure, and usually select, from an FDD uplink frequency band list (frequencyBandList) or a TDD downlink frequency band list (frequencyBandList), a 1^{st} frequency band that is supported by the UE and for which the UE supports at least one corresponding emission requirement. That the UE supports the emission requirement may be understood as that the UE supports an additional frequency emission requirement (additionalSpectrumEmission) in a maximum power list (NR-NS-PmaxList) corresponding to the frequency band. In addition, if the cell is configured with a supplementary uplink carrier (supplementary uplink carrier, SUL), the terminal device may also select a frequency band for the SUL. A frequency band selection condition for the SUL is similar to a frequency band selection condition for a normal uplink carrier (normal uplink carrier, NUL). Details are not described herein.

However, the UE may have different capabilities of supporting communication modes on different frequency bands. For example, the UE supports only HD-FDD on a frequency band #1, and supports not only HD-FDD on a frequency band #2 (for example, the UE supports FD-FDD on the frequency band #2). In this case, even if the half-duplex support field is not present, that is, the cell does not support HD-FDD, because the foregoing condition (2) is not met, the terminal device may not determine that the cell is barred, and subsequently selects the frequency band #1. It can be learned that, on the frequency band #1, one of the terminal device and the cell does not support HD-FDD, and the other supports only HD-FDD. As a result, the terminal device cannot operate. For example, the following problem scenarios may occur:

### Problem scenario 1:

As shown in Table 1, the cell does not support HD-FDD, and the UE supports FD-FDD only on a band that is not supported by the cell (even if only HD-FDD is supported on a band supported by the cell). As a result, a condition that "the UE supports only an HD-FDD operation" is not met, and the UE does not consider that the cell is barred, and performs a subsequent operation. Finally, a band is selected according to a subsequent procedure. However, because the cell does not support HD-FDD, the UE cannot perform HD-FDD on the band and cannot operate. The band supported by the cell may also be understood as a band to which the cell belongs, that is, a band present in a frequency band list of the cell.

**Table 1**

| Band supported by a UE | Band 1 | Band 2 | Band 3 |
|---|---|---|---|
| Whether the UE supports HD-FDD on the supported band | Support only HD-FDD | Support only HD-FDD | Support FD-FDD |
| Band supported by a cell | Supported | Supported | Not supported |
| Whether the cell supports HD-FDD | Not supported | | |
| Cell barred result determined based on a halfDuplexRedCap-Allowed field | Not barred | | |
| Cell barred result determined based on others | Not barred | | |
| Band finally selected by the UE | Band 1 | | |

### Problem scenario 2:

Refer to Table 2. The cell does not support HD-FDD, and the UE supports HD-FDD on a supported band, and does not support HD-FDD on a supported band. As a result, a condition that "the UE supports only an HD-FDD operation" is not met, and the UE does not consider that the cell is barred, and performs a subsequent operation. Finally, a band is selected according to a subsequent procedure. However, because the cell does not support HD-FDD, the UE cannot perform HD-FDD on the band and cannot operate.

**Table 2**

| Band supported by a UE | Band 1 | Band 2 | Band 3 |
|---|---|---|---|
| Whether the UE supports HD-FDD on the supported band | Support only HD-FDD | Support FD-FDD | Support FD-FDD |
| Band supported by a cell | √ | √ | × |
| Whether the cell supports HD-FDD | Not supported | | |
| Cell barred result determined based on a halfDuplexRedCap-Allowed field | Not barred | | |
| Cell barred result determined based on others | Not barred | | |
| Band finally selected by the UE | Band 1 | | |

### Problem scenario 3:

Refer to Table 3. The cell is configured with an NUL and an SUL, and the UE supports FD-FDD on a band for the NUL, and supports only HD-FDD on a band for the SUL. As a result, a condition that "the UE supports only an HD-FDD operation" is not met, and the UE does not consider that the cell is barred, and performs a subsequent operation. Finally, the band for the SUL is selected according to a subsequent procedure. However, because the cell does not support HD-FDD, the UE cannot perform HD-FDD on the band and cannot operate.

| Band supported by a UE | Band 1 | Band 2 | Band 3 |
|---|---|---|---|
| Whether the UE supports HD-FDD on the supported band | Support FD-FDD | Support FD-FDD | Support only HD-FDD |
| Band supported by a cell | √ | √ | √ |
| UL carrier to which the band supported by the cell belongs | NUL | | SUL |
| Whether the cell supports HD-FDD | Not supported | | |
| Cell barred result determined based on a halfDuplexRedCap-Allowed field | Not barred | | |
| Cell barred result determined based on others | Not barred | | |
| Band finally selected by the UE | Band 3 | | |

Embodiments of this application provide a communication method and a communication apparatus. When determining whether a cell is barred, a terminal device considers a capability of supporting a communication mode on a frequency band, so that operating reliability of the terminal device can be improved. The following first describes the communication method with reference to FIG. 2.

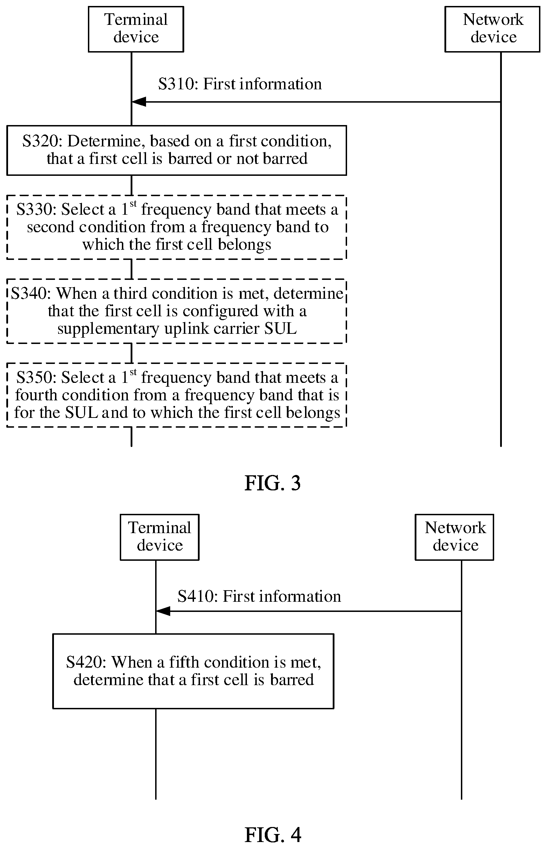

FIG. 3 is a schematic flowchart of a communication method according to an embodiment of this application.

S310: A terminal device receives first information from a network device, and correspondingly, the network device sends the first information to the terminal device.

The first information includes first configuration information and second configuration information, or the first information includes the first configuration information but does not include the second configuration information, where the first configuration information indicates a frequency band to which a first cell belongs, and the second configuration information indicates that the first cell supports a first communication mode.

In other words, the first information may be used to determine whether the first cell supports the first communication mode. If the first information includes the second configuration information, the first cell supports the first communication mode; or if the first information does not include the second configuration information, the first cell does not support the first communication mode.

In some implementations, a communication mode is a duplex mode, and the first communication mode is half-duplex frequency division duplex HD-FDD.

For example, the first information may be SI, for example, a SIB1 in the SI. The first configuration information may be a frequency band list (frequencyBandList) in the first information. The frequency band to which the first cell belongs may be understood as a frequency band supported by the first cell, or may be understood as a frequency band included in a frequency band list of the first cell. The second configuration information may be a half-duplex support field. When the first information includes the half-duplex support field, the terminal device may consider that the first cell supports HD-FDD; or when the first information does not include the half-duplex support field, the terminal device may consider that the first cell does not support HD-FDD.

It may be understood that the second configuration information may have another indication manner. For example, if the second configuration information indicates a first value, it indicates that the first cell supports the first communication mode; or if the second configuration information indicates a second value, it indicates that the first cell does not support the first communication mode. In this case, that the first information includes the second configuration information may be replaced with that the second configuration information indicates the first value, and that the first information does not include the second configuration information may be replaced with that the second configuration information indicates the second value.

In some implementations, the network device may broadcast the first information, so that the terminal device receiving the first information may determine, based on the first information, whether the first cell supports HD-FDD. That the first cell supports HD-FDD may mean that the frequency band to which the first cell belongs supports HD-FDD.

It may be understood that when the first information does not include the second configuration information, the first cell does not support the first communication mode, and the first cell may support another communication mode, for example, a second communication mode. The second communication mode is a communication mode different from the first communication mode. For example, the second communication mode may be FD-FDD. For example, if the SIB1 does not include the half-duplex support field, the terminal device may consider that the first cell does not support HD-FDD but supports FD-FDD. This is not particularly limited in this application.

Optionally, the terminal device may be a RedCap UE.

S320: The terminal device determines, based on a first condition, that the first cell is barred or not barred.

The following describes a case in which the first cell is barred.

When the first condition is not met, the first cell is barred.

The first condition includes: when the first information does not include the second configuration information, the terminal device supports the second communication mode on a first frequency band (represented by a first condition #1 below); and/or the first information includes the second configuration information (represented by a first condition #2 below). The frequency band to which the first cell belongs includes the first frequency band. Subsequently, the condition may be denoted as a first subcondition 1.

That the terminal device supports the second communication mode on the first frequency band may be understood as that the terminal device supports not only the first communication mode on the first frequency band. For example, the terminal device supports another communication mode other than the first communication mode on the first frequency band. For example, the terminal device supports FD-FDD on the first frequency band, or the terminal device supports not only HD-FDD on the first frequency band.

For example, the first condition #1 includes: when the SIB1 does not include the half-duplex support field, the terminal device supports FD-FDD on the frequency band of the first cell. In other words, when the SIB1 does not include the half-duplex support field, the terminal device supports not only HD-FDD (for example, supports FD-FDD and HD-FDD) on the frequency band of the first cell.

For example, the first condition #2 includes: the SIB1 includes the half-duplex support field.

That the first condition (or the first subcondition 1) is not met may be understood as that neither the first condition #1 nor the first condition #2 is met. In other words, a case in which the first condition is not met includes: when the first information does not include the second configuration information, the terminal device supports only the first communication mode on the first frequency band. In this case, the terminal device should consider that the first cell is barred. For example, when the first information does not include the half-duplex support field, the terminal device supports only HD-FDD on the first frequency band.

That the first condition (or the first subcondition 1) is met may be understood as that the first condition #1 is met or the first condition #2 is met, that is, either the first condition #1 or the first condition #2 is met. A case in which the first condition is met includes: Case 1: The first information includes the second configuration information. Case 2: When the first information does not include the second configuration information, the terminal device supports the second communication mode on the first frequency band.

For example, a case in which the first condition (or the first subcondition 1) is met includes: (1) The SIB1 includes the half-duplex support field. (2) When the SIB1 does not include the half-duplex support field, the terminal device supports FD-FDD on the first frequency band. In this case, the terminal device should not consider that the first cell is barred. Further, the terminal device may perform subsequent condition determining and frequency band selection.

To be specific, if the first condition (or the first subcondition 1) is not met, for example, when the first cell does not support HD-FDD, and the terminal device supports only HD-FDD on the first frequency band (or the terminal device does not support FD-HDD on the first frequency band), the terminal device may determine that the first cell and the terminal device do not support a same communication mode on the first frequency band, and therefore determine that the first cell is barred. This avoids an operating failure of the terminal device caused because the terminal device selects the first frequency band, the first cell does not support HD-FDD on the first frequency band, and the terminal device supports only an HD-FDD frequency band on the first frequency band.

The first frequency band is one or more frequency bands to which the first cell belongs. It may be understood that, that the first condition is not met may be understood as that the frequency band to which the first cell belongs does not meet the first condition, and in this case, the terminal device considers that the first cell is in a barred state. That the first condition is met may be understood as that at least one frequency to which the first cell belongs meets the first condition.

That the first cell is barred may be understood as that the terminal device considers the first cell is in the barred (barred) state, or the terminal device excludes the first cell from a candidate cell in a cell selection or cell reselection process.

Optionally, when the first condition is not met, the terminal device further considers that an intra-frequency cell of the first cell is in the barred state. Alternatively, when the first condition is not met, the terminal device considers that the first cell is in the barred state, and uses an intra-frequency reselection field (intraFreqReselectionRedCap or intraFreqReselection) to determine a status of an intra-frequency cell of the first cell.

It may be understood that the first condition may further include another condition. For example, the first condition further includes one or more of the following:
A first subcondition 2: The first frequency band is a frequency division duplex FDD frequency band.

For example, the terminal device supports one or more frequency bands in a TDD downlink frequency band list. Alternatively, the terminal device supports one or more frequency bands in an FDD uplink frequency band list. In addition, the one or more frequency bands are not frequency bands used only for downlink transmission. In other words, the one or more frequency bands include a frequency band that can be used for uplink transmission, and the first frequency band may be one or more of the frequency bands.

A first subcondition 3: The terminal device supports an emission requirement of the first frequency band.

For example, the terminal device supports at least one emission requirement for a TDD downlink frequency band or an FDD uplink frequency band.

A first subcondition 4: The terminal device supports a first uplink channel bandwidth, and a maximum transmission bandwidth of the first uplink channel bandwidth is smaller than or equal to a carrier bandwidth and is larger than or equal to a bandwidth of an initial uplink bandwidth part BWP.

For example, the terminal device supports an uplink channel bandwidth, and a maximum transmission bandwidth of the uplink channel bandwidth is smaller than or equal to a carrier bandwidth of the first cell and is larger than or equal to a bandwidth of an initial uplink BWP of the first cell. In some implementations, if the terminal device is configured with a RedCap-specific initial uplink BWP, the initial uplink BWP is the RedCap-specific initial uplink BWP.

Optionally, the carrier bandwidth of the first cell is a carrier bandwidth corresponding to an NUL, and the bandwidth of the initial uplink BWP of the first cell is a bandwidth that is of an initial uplink BWP and that corresponds to the NUL.

A first subcondition 5: The terminal device supports a first downlink channel bandwidth, and a maximum transmission bandwidth of the first downlink channel bandwidth is smaller than or equal to a carrier bandwidth and is larger than or equal to a bandwidth of an initial downlink BWP.

For example, the terminal device supports a downlink channel bandwidth, and a maximum transmission bandwidth of the downlink channel bandwidth is smaller than or equal to a carrier bandwidth of the first cell and is larger than or equal to a bandwidth of an initial downlink BWP of the first cell. In some implementations, if the terminal device is configured with a RedCap-specific initial downlink BWP, the initial downlink BWP is the RedCap-specific initial downlink BWP.

Optionally, the carrier bandwidth of the first cell is a carrier bandwidth corresponding to a downlink, and the bandwidth of the initial downlink BWP of the first cell is a bandwidth that is of an initial downlink BWP and that corresponds to an NUL.

A first subcondition 6: Uplink transmission with a frequency shift is enabled for the terminal device, and the terminal device supports the frequency shift on the first frequency band; or uplink transmission with a frequency shift is disabled for the terminal device.

For example, the terminal device may receive information #1, and the information #1 is used to enable the uplink transmission with the frequency shift. For example, the information #1 may be a 7.5 kHz frequency shift indication (frequencyShift7p5khz). If the network device configures the 7.5 kHz frequency shift indication, and the terminal device supports a corresponding 7.5 kHz frequency shift on the first frequency band, the first subcondition 6 is met. Alternatively, the terminal is not configured with frequencyShift7p5khz, the first subcondition 6 is met.

It may be understood that, that the first condition is not met may mean that any one or more subconditions included in the first condition are not met. That the first condition is met may mean that all the subconditions included in the first condition are met.

For example, if no first frequency band meets the first subcondition 1 to the first subcondition 6, the terminal device considers that the first cell is in the barred state. If at least one first frequency band meets the first subcondition 1 to the first subcondition 6, the terminal device should not consider that the first cell is barred. Further, the terminal device may perform subsequent condition determining and frequency band selection.

It should be noted that when the first condition is met, the terminal device may determine that the first cell is barred. However, when the first condition is not met, the terminal device may determine that the first cell is not barred, or the terminal device may further determine, based on another condition, whether the first cell is barred.

For example, when the first condition is met, the terminal device determines whether the first cell is configured with a tracking area code (trackingAreaCode) or a tracking area list (trackingAreaList) of a public land mobile network (public land mobile network, PLMN) or an equivalent PLMN with which the terminal device is registered. For example, if the network device does not provide a tracking area code or a tracking area list of a selected PLMN or an equivalent PLMN, the terminal device determines that the first cell is barred. If the network device provides any one or more of the foregoing parameters, the terminal device may determine that the first cell is not barred.

In some implementations, before determining whether the first condition is met, the terminal device determines once whether the cell is barred. For example, when the first information does not include the second configuration information (that is, the first cell does not support HD-FDD), and each of a plurality of frequency bands in the frequency bandwidth list that is configured for the first cell and that is obtained by the terminal device supports only HD-FDD, the terminal device determines that the first cell is barred. Otherwise, the terminal device may perform determining based on the first condition, to further determine whether the first cell is barred.

The foregoing describes a determining mechanism for determining, by the terminal device, whether the first cell is barred. For example, when determining that the first condition is not met, the terminal device determines that the cell is barred. When the first condition is met, if the terminal device does not determine that the first cell is barred, the terminal device may select a frequency band, that is, may perform the following step S330.

Optionally, in S330, the terminal device selects a 1^{st} frequency band that meets a second condition from the frequency band to which the first cell belongs.

The second condition includes: when the first information does not include the second configuration information, the second communication mode is supported (represented by a second subcondition 1 below).

For example, the second condition includes: when the SIB1 does not include the half-duplex support field, FD-FDD is supported. In other words, when the SIB1 does not include the half-duplex support field, not only HD-FDD is supported (for example, FD-FDD and HD-FDD are supported).

It may be understood that, S330 may alternatively be understood as: When the first information does not include the second configuration information, the terminal device selects the 1^{st} frequency band that meets the second condition, where the second condition includes that the frequency band supports the second communication mode.

In other words, when the first cell does not support HD-FDD, the terminal device may select the 1^{st} frequency band that supports not only HD-FDD (or supports FD-FDD) from the frequency band to which the first cell belongs. The 1^{st} frequency band may be a 1^{st} frequency band in the frequency band list of the first cell, or a frequency band with a smallest frequency band index, or a 1^{st} frequency band arranged according to a specific rule. This is not particularly limited in this application. For example, in the frequency band list to which the first cell belongs, if a frequency band 1, a frequency band 5, and a frequency band 7 support not only HD-FDD (or support FD-FDD), the terminal device may select the frequency band 1.

It may be understood that the second condition may further include another condition. For example, the second condition further includes one or more of the following:
A second subcondition 2: An emission requirement is supported.

For example, at least one emission requirement for a TDD downlink frequency band or an FDD uplink frequency band is supported.

A second subcondition 3: A frequency shift is supported when uplink transmission with the frequency shift is enabled.

For example, the terminal device may receive information #1, and the information #1 is used to enable the uplink transmission with the frequency shift. For example, the information #1 may be a 7.5 kHz frequency shift indication.

It may be understood that the second subcondition 3 is that when the uplink transmission with the frequency shift is enabled, the second condition includes that the terminal device supports the frequency shift on the frequency band.

For example, the terminal device may select, from an FDD uplink frequency band list or a TDD downlink frequency band list, a 1^{st} frequency band that is supported by the terminal device, for which the terminal device supports at least one emission requirement, and that is in frequency bands supporting not only HD-FDD (or supporting FD-FDD) when the half-duplex support field is not present.

It should be noted that the first condition can be used to determine whether the first cell is barred, and the terminal device may determine whether there is one or more first frequency bands that meet a part of the first subcondition (a subcondition related to the frequency band) in the first condition, to determine whether the cell is barred. The second condition can be used to select a frequency band, that is, select one frequency band in frequency bands that meet the second condition.

In some implementations, the frequency band selected above is a frequency band for an NUL. After selecting the frequency band for the NUL, the terminal device may further select a frequency band for an SUL based on a configuration status of the SUL. In this case, the terminal device and the network device may further perform the following step S340.

Optionally, in S340, when a third condition is met, the terminal device determines that the first cell is configured with a supplementary uplink carrier SUL.

The third condition includes: when the first information does not include the second configuration information, the terminal device supports a third communication mode on a second frequency band (represented by a third condition #1 below); or the first information includes the second configuration information (represented by a third condition #2 below). Subsequently, the condition may be denoted as a third subcondition 1.

A frequency band that is for the SUL and to which the first cell belongs includes the second frequency band, and the first communication mode is different from the third communication mode. The third communication mode may be the same as or different from the second communication mode.

That the terminal device supports the third communication mode on the second frequency band may be understood as that the terminal device supports not only the first communication mode on the second frequency band. For example, the terminal device supports another communication mode other than the first communication mode on the second frequency band. For example, the terminal device supports FD-FDD on the second frequency band, or the terminal device supports not only HD-FDD on the second frequency band. In some implementations, the third communication mode is FD-FDD.

For example, the third condition #1 includes: when the SIB1 does not include the half-duplex support field, the terminal device supports FD-FDD. In other words, when the SIB1 does not include the half-duplex support field, the terminal device supports not only HD-FDD (for example, supports FD-FDD and HD-FDD) on the second frequency band.

For example, the third condition #2 includes: the SIB1 includes the half-duplex support field.

That the third condition (or the third subcondition 1) is met may be understood as that the third condition #1 is met or the third condition #2 is met, that is, either the third condition #1 or the third condition #2 is met. A case in which the third condition is met includes: Case 1: The first information includes the second configuration information. Case 2: When the first information does not include the second configuration information, the terminal device supports the third communication mode on the second frequency band.

For example, a case in which the third condition is met includes: (1) The SIB1 includes the half-duplex support field. (2) When the SIB1 does not include the half-duplex support field, the terminal device supports FD-FDD on the frequency band for the SUL.

That the third condition (or the third subcondition 1) is not met may be understood as that neither the third condition #1 nor the third condition #2 is met. In other words, a case in which the third condition is not met includes: when the first information does not include the second configuration information, the terminal device supports only the third communication mode on the second frequency band. In this case, the terminal device should consider that SUL is not configured for the first cell. For example, when the first information does not include the half-duplex support field, the terminal device supports only HD-FDD on the second frequency band.

In other words, if the third condition is not met, for example, when the first cell does not support HD-FDD, and the terminal device does not support FD-HDD on the frequency band for the SUL (or the terminal device supports only HD-FDD on the first frequency band), the terminal device may determine that SUL is not configured for the first cell. This avoids an operating failure of the terminal device caused because the terminal device selects the frequency band for the SUL.

The third frequency band is one or more frequency bands to which the SUL of the first cell belongs, or a cell included in a frequency band list for the SUL of the first cell. It may be understood that, that the third condition is met may be understood as that at least one frequency to which the SUL of the first cell belongs meets the third condition. That the third condition is not met may be understood as that each frequency band that is for the SUL and to which the first cell belongs does not meet the third condition, and in this case, the terminal device considers that SUL is not configured for the first cell.

Determining that the first cell is configured with the supplementary uplink carrier SUL may be understood as that the terminal device considers that SUL is configured for the first cell, or the terminal device considers that the SUL of the first cell is available.

It may be understood that the third condition may further include another condition. For example, the third condition further includes one or more of the following:
A third subcondition 2: A frequency band list that is for the SUL and that is supported by the terminal device includes the second frequency band.

For example, the terminal device supports one or more frequency bands in the frequency band list for the SUL.

A third subcondition 3: The terminal device supports an emission requirement of the second frequency band.

For example, the terminal device supports at least one emission requirement for an uplink frequency band for the SUL.

A third subcondition 4: The terminal device supports a second uplink channel bandwidth, and a maximum transmission bandwidth of the second uplink channel bandwidth is smaller than or equal to an SUL carrier bandwidth and is larger than or equal to a bandwidth of an initial uplink BWP of the SUL.

For example, the terminal device supports an uplink channel bandwidth, and a maximum transmission bandwidth of the uplink channel bandwidth is smaller than or equal to a carrier bandwidth of the SUL of the first cell and is larger than or equal to a bandwidth of an initial uplink BWP of the SUL of the first cell.

A third subcondition 5: Uplink transmission with a frequency shift is enabled for the terminal device, and the terminal device supports the frequency shift on the second frequency band; or uplink transmission with a frequency shift is disabled for the terminal device.

Descriptions of the second frequency band (the frequency band for the SUL) in the third condition are similar to descriptions of the first frequency band (the frequency band for the NUL) in the first condition, and details are not described herein again.

For example, if the first cell is configured with SUL configuration information (for example, supplementaryUplink), the terminal device supports one or more frequency bands in the frequency band list for the SUL, the terminal device supports at least one emission requirement corresponding to a supported SUL band, the terminal device supports an uplink channel bandwidth, the channel bandwidth is smaller than or equal to the uplink carrier bandwidth and is larger than or equal to the bandwidth of the initial BWP of the SUL, and the terminal device supports not only HD-FDD on the frequency band (or the terminal device supports FD-FDD on the frequency band) when the half-duplex support field is not present, the terminal device may consider that SUL is configured for the first cell.

The foregoing describes a determining mechanism for determining, by the terminal device, whether SUL is configured for the first cell. For example, when determining that the third condition is met, the terminal device determines that SUL is configured for the first cell. Therefore, the terminal device may select a frequency band for the SUL, that is, may perform the following step S350.

Optionally, in S350, when the third condition is met, the terminal device selects a 1^{st} frequency band that meets a fourth condition from the frequency band that is for the SUL and to which the first cell belongs.

The fourth condition includes: when the first information does not include the second configuration information, the second communication mode is supported (represented by a fourth subcondition 1 below).

For example, the fourth condition includes: when the SIB1 does not include the half-duplex support field, FD-FDD is supported. In other words, when the SIB1 does not include the half-duplex support field, not only HD-FDD is supported (for example, FD-FDD and HD-FDD are supported).

It may be understood that, S350 may alternatively be understood as: When the first information does not include the second configuration information, the terminal device selects the 1^{st} frequency band that meets the fourth condition, where the fourth condition includes that the frequency band supports the third communication mode.

In other words, when the first cell does not support HD-FDD, the terminal device may select the 1^{st} frequency band that supports not only HD-FDD (or supports FD-FDD) from the frequency band that is for the SUL and to which the first cell belongs. The 1^{st} frequency band may be a 1^{st} frequency band in the frequency band list of the SUL of the first cell, or a frequency band with a smallest frequency band index, or a 1^{st} frequency band arranged according to a specific rule. This is not particularly limited in this application. For example, in the frequency band list that is for the SUL and to which the first cell belongs, if a frequency band 1 for the SUL, a frequency band 5 for the SUL, and a frequency band 7 for the SUL support not only HD-FDD (or support FD-FDD), the terminal device may select the frequency band 1 for the SUL.

It may be understood that the fourth condition may further include another condition. For example, the fourth condition further includes one or more of the following:
A fourth subcondition 2: An emission requirement is supported.

For example, the terminal device supports at least one emission requirement for an uplink frequency band for the SUL.

A fourth subcondition 3: A frequency shift is supported when uplink transmission with the frequency shift of the SUL is enabled.

Descriptions of the fourth condition are similar to descriptions of the second condition, and details are not described herein again.

For example, the terminal device may select, as the second frequency band from the frequency band list for the SUL, the 1^{st} frequency band that is supported by the terminal device, for which the terminal device supports at least one emission requirement, and that supports not only HD-FDD (or supports FD-FDD) when the half-duplex support field is not present.

According to this technical solution, in the condition for determining whether the first cell is barred, the terminal device considers a capability of the terminal device to support a communication mode on the first frequency band, to avoid a problem that a communication mode supported by the first cell on the first frequency band does not match a communication mode supported by the terminal device on the first frequency band, and improve operating reliability of the terminal device.

In the communication method described in FIG. 3, when the terminal device determines whether the first cell is barred, even if the first cell does not support HD-FDD, and the terminal device supports not only HD-FDD on one or more frequency bands, the terminal device may consider that the first cell is not barred. An embodiment of this application further provides a method. Different from the communication method described in FIG. 3, when the first cell does not support HD-FDD, the terminal device may determine, provided that the terminal device supports only HD-FDD on one of all frequency bands, that the first cell is barred. The following describes this implementation with reference to FIG. 4.

FIG. 4 is a schematic flowchart of another communication method according to an embodiment of this application.

S410: A terminal device receives first information from a network device, and correspondingly, the network device sends the first information to the terminal device.

The first information includes first configuration information and second configuration information, or the first information includes the first configuration information but does not include the second configuration information, where the first configuration information indicates N frequency bands to which a first cell belongs, the second configuration information indicates that the first cell supports a first communication mode, and N is a positive integer.

In some implementations, the N frequency bands include a frequency band for a normal uplink carrier NUL and a frequency band for a supplementary uplink carrier SUL. For example, the N frequency bands include the frequency band to which the normal uplink carrier belongs and the frequency band to which the supplementary uplink carrier belongs. In other words, if the network device configures the SUL, a frequency band list includes frequency band lists for the NUL and the SUL.

For more detailed descriptions of the first information, refer to the descriptions of step S310 in FIG. 3. Details are not described herein again.

S420: When a fifth condition is met, the terminal device determines that the first cell is barred.

The fifth condition includes: when the first information does not include the second configuration information, the terminal device supports the first communication mode but does not support a second communication mode on at least one of the N frequency bands, where the first communication mode is different from the second communication mode.

In other words, the fifth condition includes: when the first information does not include the second configuration information, the terminal device supports only the first communication mode on at least one of the N frequency bands.

For example, the fifth condition includes: when a SIB1 does not include a half-duplex support field, the terminal device supports only HD-FDD on at least one of the N frequency bands.

When the first cell does not support HD-FDD, and the terminal device supports only HD-FDD on one of all the frequency bands, the terminal device may determine that the first cell is barred.

According to this technical solution, in the condition for determining whether the first cell is barred, the terminal device considers a capability of the terminal device to support a communication mode on the N frequency bands, to avoid a problem that a communication mode supported by the first cell does not match a communication mode supported by the terminal device on a selected frequency band, and improve operating reliability of the terminal device.

In some implementations, an embodiment of this application provides a capability reporting method.

For example, a terminal device sends capability information to a network device. Correspondingly, the network device receives the capability information from the terminal device.

The capability information indicates that the terminal device supports or does not support half-duplex frequency division duplex HD-FDD on a first frequency band pair, where the first frequency band pair includes a frequency band for a supplementary uplink carrier and a frequency band for a downlink carrier.

Optionally, the frequency band for the supplementary uplink is a frequency band that is for the supplementary uplink and that is supported by the terminal device, and the frequency band for the downlink carrier is a frequency band that is for the downlink carrier and that is supported by the terminal device.

In other words, the terminal device may report, for a downlink frequency band, whether the SUL supports HD-FDD. For example, the terminal device reports, for one or more supported downlink frequency bands, whether the terminal device supports HD-FDD with reference to the SUL.

When the terminal device selects a frequency band, if an SUL is selected, the terminal device may determine, based on an HD-FDD capability of the terminal device on an SUL-DL frequency band pair and optionally, a capability of supporting HD-FDD by a cell, whether to use the SUL.

A network determines, based on the HD-FDD capability that corresponds to the SUL-DL frequency band pair and that is reported by the terminal device, whether the terminal device supports HD-FDD.

Currently, in the conventional technology, the terminal device and the network device can only consider that the UE supports HD-FDD or does not support HD-FDD on all downlink frequency bands for the SUL. According to this technical solution, it is specified that the terminal device reports, for a downlink frequency band, whether the SUL supports HD-FDD, so that whether the SUL supports HD-FDD can be indicated more flexibly and at a finer granularity.

It may be understood that the method in FIG. 2 and FIG. 3 and the capability reporting method provided in the foregoing embodiments of this application may be independently implemented, or may be implemented in combination. For example, the method provided in FIG. 2 and the capability reporting method may be implemented in combination. For example, in step S340 in FIG. 2, the terminal device may determine, by using the capability reporting method, whether HD-FDD is supported on the frequency band for the SUL. For another example, the method provided in FIG. 3 and the capability reporting method may be implemented in combination. For example, the terminal device may determine, in the manner shown in FIG. 3, whether the cell is barred, and determine, by using the capability reporting method, whether the terminal device supports HD-FDD on the frequency band for the SUL in a subsequent procedure. This is not particularly limited in this application.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It may be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "including", "comprising", "having", and their variants all mean "including but are not limited to", unless otherwise specifically emphasized in another manner.

It should be understood that, in various embodiments of this application, first, second, and various numbers are merely for differentiation for ease of description, and are not intended to limit the scope of embodiments of this application. For example, different information is differentiated.

It may be understood that, in various embodiments of this application, an "indication" may include a direct indication and an indirect indication, or may include an explicit indication and an implicit indication. Information indicated by specific information (for example, the foregoing first information) is referred to as to-be-indicated information. During specific implementation, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

It should be understood that, in various embodiments of this application, "preconfiguration" may be implemented by pre-storing corresponding code or a corresponding table in a device (for example, a first terminal device), or in another manner that may indicate related information. A specific implementation of the "preconfiguration" is not limited in this application.

It may be understood that "transmission" is mentioned in some of the foregoing embodiments, and unless otherwise specified, transmission includes receiving and/or sending. For example, performing transmission of a signal may include receiving a signal and/or sending a signal.

It may be understood that, in embodiments of this application, "receiving" may alternatively be replaced with "detecting" or "monitoring".

It may be understood that, in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be understood that formulas used in embodiments of this application are merely examples for description and do not limit the protection scope of embodiments of this application. In a process of calculating the foregoing related parameters, calculation may be performed based on the foregoing formulas, or calculation may be performed based on variations of the foregoing formulas, or calculation may be performed in another manner, to satisfy calculation results of the formulas.

It may be understood that some optional features in embodiments of this application may be independent of other features in some scenarios, or may be combined with other features in some scenarios. This is not limited.

It may be understood that the solutions in embodiments of this application may be appropriately combined for use, and explanations or descriptions of terms in embodiments may be mutually referenced or explained in embodiments. This is not limited.

It may be further understood that, in the foregoing method embodiments, the method and operation implemented by the terminal device may alternatively be implemented by a component (for example, a chip or a circuit) of the terminal device. In addition, the method and operation implemented by the network device may alternatively be implemented by a component (for example, a chip or a circuit) of the network device. This is not limited.

In correspondence to the methods provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

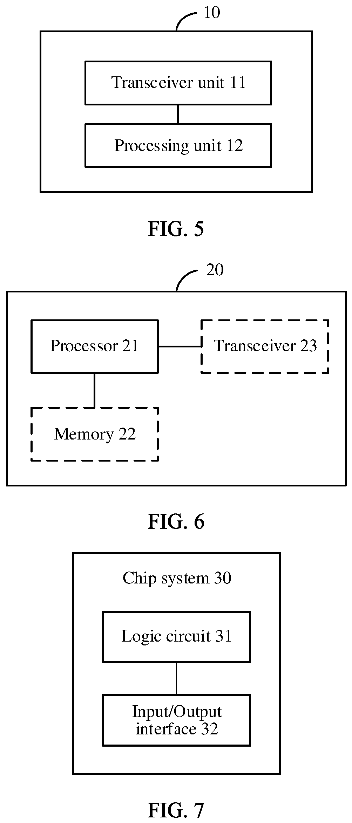

For example, FIG. 5 is a diagram of a communication apparatus 10 according to an embodiment of this application. The apparatus 10 includes a transceiver unit 11 and a processing unit 12. The transceiver unit 11 may be configured to implement a corresponding communication function. The transceiver unit 11 may also be referred to as a communication interface or a communication unit. The processing unit 12 may be configured to perform data or information processing.

Optionally, the apparatus 10 further includes a storage unit. The storage unit may be configured to store instructions and/or data. The processing unit 12 may read the instructions and/or the data in the storage unit, to cause the apparatus to implement the foregoing method embodiments.

In a possible design, the apparatus 10 may be configured to perform actions performed by the terminal device in the foregoing method embodiments. In this case, the apparatus 10 may be the terminal device or a component of the terminal device. The transceiver unit 11 is configured to perform sending and receiving-related operations on a terminal device side in the foregoing method embodiments. The processing unit 12 is configured to perform processing-related operations on the terminal device side in the foregoing method embodiments.

In a first possible implementation, the transceiver unit 11 is configured to receive first information, where the first information includes first configuration information and second configuration information, or the first information includes the first configuration information but does not include the second configuration information, where the first configuration information indicates a frequency band to which a first cell belongs, and the second configuration information indicates that the first cell supports a first communication mode. The processing unit 12 is configured to determine, based on a first condition, that the first cell is barred or not barred, and when the first condition is not met, the first cell is barred, where the first condition includes: when the first information does not include the second configuration information, the terminal device supports a second communication mode on a first frequency band, where the frequency band to which the first cell belongs includes the first frequency band, and the first communication mode is different from the second communication mode.

The apparatus 10 may implement steps or procedures performed by the terminal device in the method embodiments according to embodiments of this application. The apparatus 10 may include units configured to perform the method performed by the terminal device in the method embodiments according to embodiments of this application. A specific process in which the units perform the foregoing corresponding steps is described in detail in the foregoing method embodiments. For brevity, details are not described herein again.

In another possible design, the apparatus 10 may be configured to perform actions performed by the network device in the foregoing method embodiments. In this case, the apparatus 10 may be the network device or a component of the network device. The transceiver unit 11 is configured to perform sending and receiving-related operations on a network device side in the foregoing method embodiments. The processing unit 12 is configured to perform processing-related operations on the network device side in the foregoing method embodiments.

In a first possible implementation, the processing unit 12 is configured to generate first information. The transceiver unit 11 is configured to send the first information, where the first information includes first configuration information and second configuration information, or the first information includes the first configuration information but does not include the second configuration information, where the first configuration information indicates a frequency band to which a first cell belongs, and the second configuration information indicates that the first cell supports a first communication mode; and when the first condition is not met, the first cell is barred, where the first condition includes: when the first information does not include the second configuration information, a terminal device supports a second communication mode on a first frequency band, where the frequency band to which the first cell belongs includes the first frequency band, and the first communication mode is different from the second communication mode.

The apparatus 10 may implement steps or procedures performed by the network device in the method embodiments according to embodiments of this application. The apparatus 10 may include units configured to perform the method performed by the network device in the method embodiments according to embodiments of this application. A specific process in which the units perform the foregoing corresponding steps is described in detail in the foregoing method embodiments. For brevity, details are not described herein again.

It should be understood that the apparatus 10 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another appropriate component that supports the described functions. In an optional example, a person skilled in the art may understand that the apparatus 10 may be specifically the terminal device in the foregoing embodiments, and may be configured to perform procedures and/or steps corresponding to the terminal device in the foregoing method embodiments; or the apparatus 10 may be specifically the network device in the foregoing embodiments, and may be configured to perform procedures and/or steps corresponding to the network device in the foregoing method embodiments. To avoid repetition, details are not described herein again.

The apparatus 10 in each of the foregoing solutions has a function of implementing corresponding steps performed by the communication device (for example, the terminal device or the network device) in the foregoing methods. The function may be implemented by hardware, or may be implemented by hardware executing corresponding software. The hardware or the software includes at least one module corresponding to the foregoing function. For example, the transceiver unit may be replaced with a transceiver machine (where for example, a sending unit in the transceiver unit may be replaced with a transmitter machine, and a receiving unit in the transceiver unit may be replaced with a receiver machine), and another unit, for example, the processing unit, may be replaced with a processor, to respectively perform sending and receiving operations and related processing operations in the method embodiments.

In addition, the transceiver unit 11 may alternatively be a transceiver circuit (for example, may include a receiver circuit and a transmitter circuit), and the processing unit may be a processing circuit.

It should be noted that the apparatus in FIG. 5 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

For example, FIG. 6 is a diagram of another communication apparatus 20 according to an embodiment of this application. The apparatus 20 includes a processor 21, and the processor 21 is coupled to a memory 22. Optionally, the apparatus 20 further includes the memory 22. The memory 22 is configured to store a computer program or instructions and/or data. The processor 21 is configured to execute the computer program or the instructions stored in the memory 22, or read the data stored in the memory 22, to perform the method in the foregoing method embodiments.

Optionally, there is at least one processor 21.

Optionally, there is at least one memory 22.

Optionally, the memory 22 and the processor 21 are integrated together or disposed separately.

Optionally, as shown in FIG. 6, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the terminal device in the foregoing method embodiments.

For example, the processor 21 is configured to execute the computer program or the instructions stored in the memory 22, to implement related operations of the terminal device in the foregoing method embodiments, for example, the method performed by the terminal device in the embodiment shown in FIG. 3.

In another solution, the apparatus 20 is configured to implement operations performed by the network device in the foregoing method embodiments.

For example, the processor 21 is configured to execute the computer program or the instructions stored in the memory 22, to implement related operations of the network device in the foregoing method embodiments, for example, the method performed by the network device in the embodiment shown in FIG. 3.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these memories and any memory of another appropriate type.

For example, FIG. 7 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

Specifically, for example, if the chip system 30 is installed in a terminal device, the logic circuit 31 is coupled to the input/output interface 32, and the input/output interface 32 may input a wake-up signal to the logic circuit 31 for processing.

In a solution, the chip system 30 is configured to implement operations performed by the terminal device in the foregoing method embodiments.

For example, the logic circuit 31 is configured to implement processing-related operations performed by the terminal device in the foregoing method embodiments, for example, a processing-related operation performed by the terminal device in the embodiment shown in FIG. 3. The input/output interface 32 is configured to implement sending and/or receiving-related operations performed by the terminal device in the foregoing method embodiments, for example, a sending and/or receiving-related operation performed by the terminal device in the embodiment shown in FIG. 3.

In another solution, the chip system 30 is configured to implement operations performed by the network device in the foregoing method embodiments.

For example, the logic circuit 31 is configured to implement processing-related operations performed by the network device in the foregoing method embodiments, for example, a processing-related operation performed by the network device in the embodiment shown in FIG. 3. The input/output interface 32 is configured to implement sending and/or receiving-related operations performed by the network device in the foregoing method embodiments, for example, a sending and/or receiving-related operation performed by the network device in the embodiment shown in FIG. 3.

An embodiment of this application further provides a computer-readable storage medium. The computer-readable storage medium stores computer instructions for implementing the method performed by the device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the apparatus embodiments described above are merely examples. For example, division into the units is merely logical function division, and another division manner may be used in an actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of the embodiments may be implemented in a form of a computer program product. The computer program product includes at least one computer instruction. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating at least one usable medium. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applicable to a terminal device or a chip of the terminal device, and the method comprises:
receiving first information, wherein the first information comprises first configuration information and second configuration information, or the first information comprises the first configuration information but does not comprise the second configuration information, wherein the first configuration information indicates a frequency band to which a first cell belongs and that comprises a first frequency band, and the second configuration information indicates that the first cell supports a first communication mode; and
determining, based on a first condition, that the first cell is barred or not barred, wherein
the first condition comprises:
a first subcondition: when the first information does not comprise the second configuration information, the terminal device supports a second communication mode on the first frequency band; or
a second subcondition: the first information comprises the second configuration information; and
the first communication mode is different from the second communication mode.

2. The method according to claim 1, wherein the method further comprises:
when the first condition is not met, the first cell is barred, wherein that the first condition is not met comprises that the first subcondition is not met, and the second subcondition is not met.

3. The method according to claim 1 or 2, wherein
the first information is a system information block 1 SIB1, and the first configuration information is a frequency band list frequencyBandList.

4. The method according to any one of claims 1 to 3, wherein the terminal device is a reduced capability terminal device RedCap UE.

5. The method according to any one of claims 1 to 4, wherein the first communication mode is half-duplex frequency division duplex HD-FDD, and the second communication mode is full-duplex frequency division duplex FD-FDD.

6. The method according to any one of claims 1 to 5, wherein the method further comprises: determining, when one or more of the following are not met, that the first cell is barred:
the first frequency band is a frequency division duplex FDD frequency band;
the terminal device supports an emission requirement of the first frequency band;
the terminal device supports a first uplink channel bandwidth, and a maximum transmission bandwidth of the first uplink channel bandwidth is smaller than or equal to a carrier bandwidth and is larger than or equal to a bandwidth of an initial uplink bandwidth part BWP;
the terminal device supports a first downlink channel bandwidth, and a maximum transmission bandwidth of the first downlink channel bandwidth is smaller than or equal to a carrier bandwidth and is larger than or equal to a bandwidth of an initial downlink BWP; and
uplink transmission with a frequency shift is enabled for the terminal device, and the terminal device supports the frequency shift on the first frequency band; or uplink transmission with a frequency shift is disabled for the terminal device.

7. The method according to any one of claims 1 to 6, wherein when the first condition is met, a 1^{st} frequency band that meets a second condition is selected from the frequency band to which the first cell belongs, and the second condition comprises:
when the first information does not comprise the second configuration information, the second communication mode is supported.

8. The method according to claim 7, wherein the second condition further comprises one or more of the following:
an emission requirement is supported; and
a frequency shift is supported when uplink transmission with the frequency shift is enabled.

9. The method according to any one of claims 1 to 8, wherein the method further comprises:
when a third condition is met, determining that the first cell is configured with a supplementary uplink carrier SUL, wherein
the third condition comprises: when the first information does not comprise the second configuration information, the terminal device supports the third communication mode on a second frequency band; or the first information comprises the second configuration information, wherein
a frequency band that is for the SUL and to which the first cell belongs comprises the second frequency band, and the first communication mode is different from the third communication mode.

10. The method according to claim 9, wherein the third condition further comprises one or more of the following:
a frequency band list that is for the SUL and that is supported by the terminal device comprises the second frequency band;
the terminal device supports an emission requirement of the second frequency band;
the terminal device supports a second uplink channel bandwidth, and a maximum transmission bandwidth of the second uplink channel bandwidth is smaller than or equal to an SUL carrier bandwidth and is larger than or equal to a bandwidth of an initial uplink BWP of the SUL; and
uplink transmission with a frequency shift is enabled for the terminal device, and the terminal device supports the frequency shift on the second frequency band; or uplink transmission with a frequency shift is disabled for the terminal device.

11. The method according to claim 9 or 10, wherein when the third condition is met, a 1^{st} frequency band that meets a fourth condition is selected from the frequency band that is for the SUL and to which the first cell belongs, and the fourth condition comprises:
when the first information does not comprise the second configuration information, the second communication mode is supported.

12. The method according to claim 11, wherein the fourth condition further comprises one or more of the following:
an emission requirement is supported; and
a frequency shift is supported when uplink transmission with the SUL frequency shift is enabled.

13. A communication method, wherein the method is applicable to a terminal device or a chip of the terminal device, and the method comprises:
receiving first information, wherein the first information comprises first configuration information and second configuration information, or the first information comprises the first configuration information but does not comprise the second configuration information, wherein the first configuration information indicates a frequency band to which a first cell belongs and that is a first frequency band, and the second configuration information indicates that the first cell supports a first communication mode; and
when a first subcondition is not met and a second subcondition is not met, determining that the first cell is barred, wherein
the first subcondition is that when the first information does not comprise the second configuration information, the terminal device supports a second communication mode on the first frequency band, and the second subcondition is that the first information comprises the second configuration information.

14. The method according to claim 13, wherein
the first information is a system information block 1 SIB1, and the first configuration information is a frequency band list frequencyBandList.

15. The method according to claim 13 or 14, wherein the terminal device is a reduced capability terminal device RedCap UE.

16. The method according to any one of claims 13 to 15, wherein the first communication mode is half-duplex frequency division duplex HD-FDD, and the second communication mode is full-duplex frequency division duplex FD-FDD.

17. A communication system, comprising a network device and a terminal device, wherein
the network device sends first information to the terminal device, wherein the first information comprises first configuration information and second configuration information, or the first information comprises the first configuration information but does not comprise the second configuration information, wherein the first configuration information indicates a frequency band to which a first cell belongs, and the second configuration information indicates that the first cell supports a first communication mode; and
the terminal device determines, based on a first condition, that the first cell is barred or not barred, wherein
the first condition comprises:
a first subcondition: when the first information does not comprise the second configuration information, the terminal device supports a second communication mode on the first frequency band; or
a second subcondition: the first information comprises the second configuration information; and
the first communication mode is different from the second communication mode.

18. A communication apparatus, wherein the apparatus comprises a transceiver unit and a processing unit, wherein
the transceiver unit is configured to receive first information, wherein the first information comprises first configuration information and second configuration information, or the first information comprises the first configuration information but does not comprise the second configuration information, wherein the first configuration information indicates a frequency band to which a first cell belongs, and the second configuration information indicates that the first cell supports a first communication mode; and
the processing unit is configured to determine, based on a first condition, that the first cell is barred or not barred, wherein
the first condition comprises:
a first subcondition: when the first information does not comprise the second configuration information, the terminal device supports a second communication mode on the first frequency band; or
a second subcondition: the first information comprises the second configuration information; and
the first communication mode is different from the second communication mode.

19. A communication apparatus, wherein the apparatus comprises a transceiver unit and a processing unit, wherein
the transceiver unit is configured to receive first information, wherein the first information comprises first configuration information and second configuration information, or the first information comprises the first configuration information but does not comprise the second configuration information, wherein the first configuration information indicates a frequency band to which a first cell belongs and that is a first frequency band, and the second configuration information indicates that the first cell supports a first communication mode; and
when a first subcondition is not met and a second subcondition is not met, the processing unit is configured to determine that the first cell is barred, wherein
the first subcondition is that when the first information does not comprise the second configuration information, the terminal device supports a second communication mode on the first frequency band, and the second subcondition is that the first information comprises the second configuration information.

20. A computer-readable storage medium, wherein the computer-readable storage medium stores a computer program, and when the computer program runs on a computer, the computer is caused to perform the method according to any one of claims 1 to 12, or the computer is caused to perform the method according to claim 13 or 16.

21. A computer program product, comprising computer program code, wherein when the computer program code is run on a computer, the computer is caused to perform the method according to any one of claims 1 to 12, or the computer is caused to perform the method according to claim 13 or 16.

22. A communication apparatus, comprising a processor, configured to execute a computer program stored in a memory, to cause the computer to perform the method according to any one of claims 1 to 12, or cause the computer to perform the method according to claim 13 or 16.

23. The apparatus according to claim 22, wherein the apparatus further comprises the memory.
